# EUROPÄISCHE PATENTSCHRIFT

(11) **EP 2 943 431 B1**
(45) Veröffentlichungstag und Bekanntmachung des Hinweises auf die Patenterteilung: **01.08.2018**
(21) Anmeldenummer: 13814842.4
(22) Anmeldetag: 20.12.2013
(51) Int. Cl.: B66F 9/075, B62D 21/14, B60L 15/00, B60L 15/20, B62D 53/02

(54) **FAHRZEUG**
VEHICLE
VÉHICULE

(30) Priorität: 10.01.2013 DE 102013000259
(43) Veröffentlichungstag der Anmeldung: 18.11.2015
(73) Patentinhaber: Sew-Eurodrive GmbH & Co. KG, 76646 Bruchsal (DE)
(72) Erfinder: SCHMIDT, Josef, 76676 Graben-Neudorf (DE); DEGEN, Dirk, 76646 Bruchsal (DE)
(86) Internationale Anmeldenummer: PCT/EP2013/003886
(87) Internationale Veröffentlichungsnummer: WO 2014/108162

(56) Entgegenhaltungen:
- GB-A- 2 467 586
- US-A1- 2012 145 471
- US-B1- 8 215 657

## Beschreibung

Die Erfindung betrifft ein Fahrzeug.

Es ist allgemein bekannt, dass Fahrzeuge mittels eines Antriebsrads antreibbar sind. Ein Gabelstapler weist zusätzlich eine Hubachse auf, um eine Last anzuheben oder abzusenken. Allerdings benötigt die Hubachse eine Antriebseinheit.

Beispielsweise ist aus der US 8 215 657 B1 ein Fahrzeug mit zwei Fahrgestellteilen bekannt, die mittels einer schiefen Ebene verbunden sind.

Der Erfindung liegt daher die Aufgabe zugrunde, ein Fahrzeug in kompakter und einfach herstellbarer Weise weiterzubilden.

Erfindungsgemäß wird die Aufgabe bei dem Fahrzeug nach den in Anspruch 1 angegebenen Merkmalen gelöst.

Wichtige Merkmale der Erfindung bei dem Fahrzeug sind, dass das Fahrzeug zwei Fahrgestellteile aufweist, die mittels einer schiefen Ebene verbunden sind, insbesondere die mittels einer Führung und/oder Gleitlagerung entlang einer schiefen Ebene,
wobei an zumindest einem der Fahrgestellteile ein erstes Antriebrad angeordnet ist und am anderen der Fahrgestellteile ein Rad,
wobei mittels einer Einrichtung eine Drehzahldifferenz zwischen der Drehzahl des Antriebsrads und der Drehzahl des Rades bewirkbar ist.

Von Vorteil ist dabei, dass durch einen Zeitabschnitt, in welchem die beiden Räder unterschiedliche Drehzahl aufweisen, eine Höhenverstellung bewirkbar ist. Dazu ist äquivalent ein relativer Winkeldifferenzwert zwischen dem Winkelwert des Rades und des Antriebsrades. Erfindungsgemäß wird kein Zusatzelement, wie Elektromotor, zur Erzeugung der Hubbewegung benötigt sondern es ist nur ein Beeinflussen der Bewegung der Verfahrräder notwendig.

Bei einer vorteilhaften Ausgestaltung sind die Fahrgestellteile mittels einer Führung entlang der schiefen Ebene geführt angeordnet. Von Vorteil ist dabei, dass für die Fahrgestellteile nur die Bewegung entlang der schiefen Ebene ausführbar ist.

Bei einer vorteilhaften Ausgestaltung ist ein Arretierungsmittel vorgesehen, mittels dessen die relative Bewegung der Fahrgestellteile entlang der schiefen Ebene arretierbar oder freigebbar ist. Von Vorteil ist dabei, dass Unebenheiten beim Verfahren keine Höhenverstellung bewirken.

Bei einer vorteilhaften Ausgestaltung ist die Einrichtung eine Bremseinrichtung, insbesondere welche auf das Rad wirkt,
insbesondere wobei das Rad eine Bockrolle oder eine Lenkrolle ist. Von Vorteil ist dabei, dass nur eine einzige Antriebseinheit notwendig ist und das am anderen Fahrgestellteil angeordnete Rad mittels einer Bremseinrichtung auf eine andere Drehzahl bringbar ist.

Bei einer vorteilhaften Ausgestaltung weist die Einrichtung einen gesteuerten oder geregelten Elektromotor auf, mittels dessen das Rad antreibbar ist, insbesondere mit einer vorgegebenen Solldrehzahl, welche bei Ausführung einer Normalfahrt, insbesondere also Fahrt ohne Hubbewegung, gleich und bei Ausführung der Hubbewegung unterschiedlich ist zur Drehzahl des ersten Antriebsrades. Von Vorteil ist dabei, dass eine Hubbewegung in einfacher Weise ausführbar ist. Insbesondere ist schon ein Ausführen des Hubs während der Fahrt möglich, wobei die Fahrantriebe unterschiedlich betrieben werden. Ein separater Hubwerksantrieb ist nicht notwendig.

Bei einer vorteilhaften Ausgestaltung weist das Antriebsrad einen gesteuerten oder geregelten Elektromotor auf, mittels dessen das Rad antreibbar ist, insbesondere mit einer vorgegebenen Solldrehzahl, welche bei Ausführung einer Normalfahrt ohne Hubbewegung gleich und bei Ausführung einer Hubbewegung unterschiedlich ist zur Solldrehzahl des Rades. Von Vorteil ist dabei, dass die Hubbewegung über zum Verfahren vorgesehene Räder der Fahrgestellteile bewirkbar ist.

Bei einer vorteilhaften Ausgestaltung weist die Richtung der Normale der schiefen Ebene einen nicht verschwindenden Winkelbetrag zur Richtung der Normale der Verfahrebene auf. Von Vorteil ist dabei, dass die schiefe Ebene nicht parallel zur Verfahrebene ist.

Bei einer vorteilhaften Ausgestaltung ist das Antriebsrad oder das Rad über eine Linearführung mit dem ersten oder zweiten Fahrgestellteil verbunden. Von Vorteil ist dabei, dass bei der Hubbewegung das Antriebsrad oder Rad die Haftung mit dem Boden nicht verliert.

Bei einer vorteilhaften Ausgestaltung sind an einem oder beiden der Fahrgestellteile Lenkrollen oder Bockrollen angeordnet. Von Vorteil ist dabei, dass die Gewichtskraft über diese Rollen in die Verfahrfläche einleitbar ist.

Bei einer vorteilhaften Ausgestaltung überträgt eine Steuereinrichtung Steuersignale und/oder Steuerinformation, insbesondere Solldrehzahl oder Solldrehmoment, zum Umrichter und/oder zur Einrichtung. Von Vorteil ist dabei, dass eine Steuerung der Hubbewegung ausführbar ist, indem die relative Drehzahldifferenz für einen Zeitabschnitt entsprechend vorgegeben wird, also einen relativen Verstellwinkelwert der Räder des Fahrzeugs.

Bei einer vorteilhaften Ausgestaltung ist das Antriebsrad mittels eines am Fahrgestellteil abgestützten Federelements oder eines Linearaktors gegen die Verfahrebene gedrückt. Von Vorteil ist dabei, dass eine genügend hohe Anpresskraft aufbringbar ist, so dass das Antriebsrad die Bodenhaftung nicht verliert.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist eine schematische Darstellung eines Fahrzeugs, insbesondere Transportfahrzeugs, gezeigt, wobei eine Normalfahrt dargestellt ist.
In der Figur 2 ist bei dem Fahrzeug gezeigt, wie ein Hub 5 realisiert wird.
In der Figur 3 ist für ein anderes erfindungsgemäßes Fahrzeug eine Normalfahrt gezeigt, wobei das Fahrzeug nur ein Antriebsradpaar 30 aufweist.
In der Figur 4 ist bei dem Fahrzeug nach Figur 3 gezeigt, wie ein Hub realisiert wird.

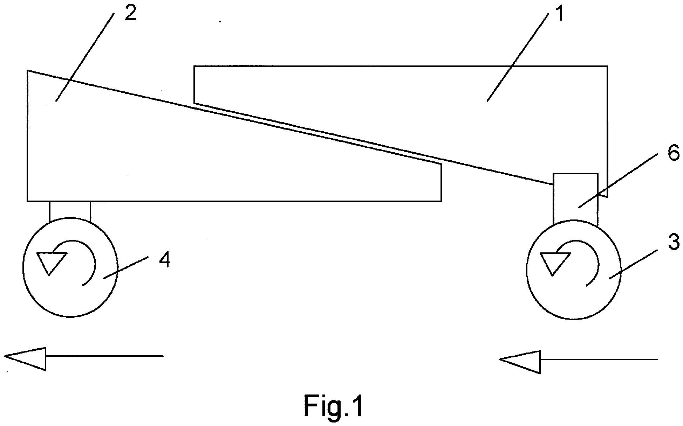

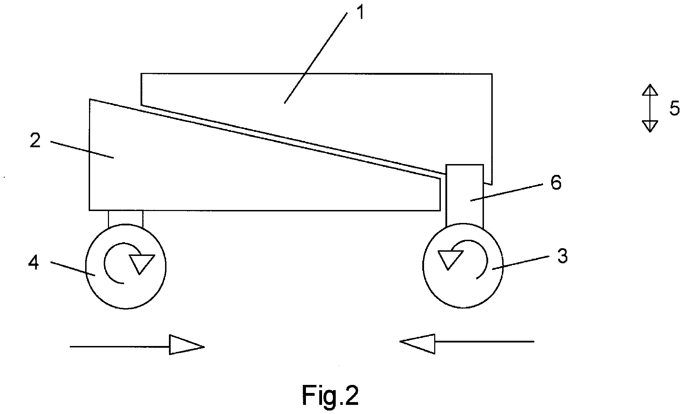

Wie in Figur 1 und Figur 2 gezeigt, weist das Fahrgestell des Fahrzeugs eine schiefe Ebene auf. Ein erstes Fahrgestellteil 1 und ein zweites Fahrgestellteil 2 sind also über eine schiefe Ebene verbunden, so dass bei relativer Annäherung der beiden Fahrgestellteile (1, 2) eines der Fahrgestellteile 1, im Beispiel das erste Fahrgestellteil 1, angehoben wird. Die Oberseite des ersten Fahrgestellteils 1 ist also mit einem in die Höhe zu befördernden Objekt bestückbar.

Auf diese Weise ist ein Gabelstapler ersetzbar durch das erfindungsgemäße Fahrzeug. Eine in einer ersten Höhe aufgenommene Last ist also zu einer andere Position transportierbar, die eine andere Höhe aufweist.

Das erste Fahrgestellteil 1 ist mit einem ersten Antriebsrad 3 über eine Linearführung 6 verbunden, das von einem Elektromotor antreibbar ist.

Die Linearführung 6 ermöglicht, dass das erste Antriebsrad während der Hubbewegung in Haftung verbleibt mit der Verfahrfläche. Während der Hubbewegung wird das erste Fahrgestellteil 1 angehoben und ist dabei geführt durch die Linearführung 6.

Das zweite Fahrgestellteil 2 weist ebenfalls ein Antriebsrad 4 auf, wobei dieses zweite Antriebsrad 4 ebenfalls von einem Elektromotor antreibbar ist.

Statt der in den Figuren gezeigten einzelnen Räder sind jeweils mehrere Räder einsetzbar, welche entsprechend synchron betriebene Antriebe, insbesondere Elektromotoren, aufweisen.

Wie in Figur 2 gezeigt, ist die Hubbewegung durch relatives Aufeinanderzubewegen erzeugt, da dann die über die schiefe Ebene, die beispielsweise mit Gleitlager oder Wälzkörperlagerung ausführbar ist, verbundenen Fahrgestellteile (1, 2) aufeinander zu bewegt werden und somit das erste Fahrgestellteil 1 angehoben werden muss, da das zweite Fahrgestellteil ein an ihm in Höhenrichtung unbewegbares zweites Antriebsrad 4 aufweist.

Das zweite Antriebsrad 4 ist dabei über ein Lager am zweiten Fahrgestellteil 2 gelagert. Das erste Antriebsrad 3 ist über ein Lager an der Linearführung 6 gelagert, welche wiederum mit dem zweiten Fahrgestellteil 2 verbunden ist.

Die Elektromotoren sind von einem Umrichter gespeist und weisen vorzugsweise Sensoren zur Erfassung der Winkellage der Rotorwelle des jeweiligen Elektromotors oder des jeweiligen Antriebsrades (3, 4) auf. Somit sind die Antriebsräder (3, 4) präzise in ihrer Winkelstellung regelbar oder steuerbar, insbesondere bei Ausführung der Elektromotoren als Synchronmotoren. Auf diese Weise ist die Höhe ebenso entsprechend präzise steuerbar oder regelbar.

Statt der in Figur 2 gezeigten beidseitigen Bewegung beider Antriebsräder (3, 4) aufeinander zu, ist auch eines der Räder langsamer bewegbar als das andere. Somit ist schon während der Fahrt des Fahrzeuges ein Anheben der Last ermöglicht. Auch ein Abbremsen eines der Antriebsräder (3, 4) und ein gleichzeitige Bewegen des anderen der Antriebsräder (3, 4) bewirkt eine Hubbewegung.

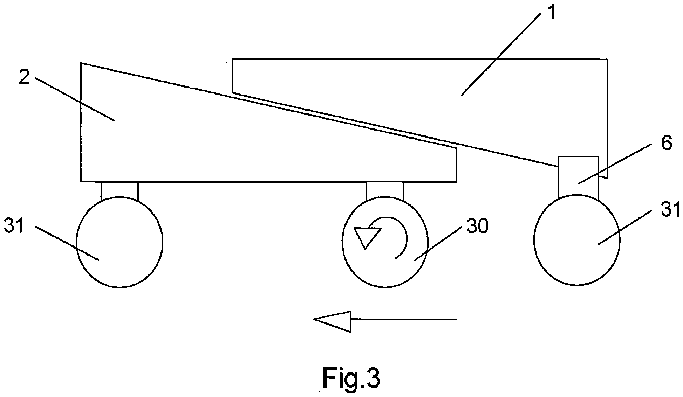

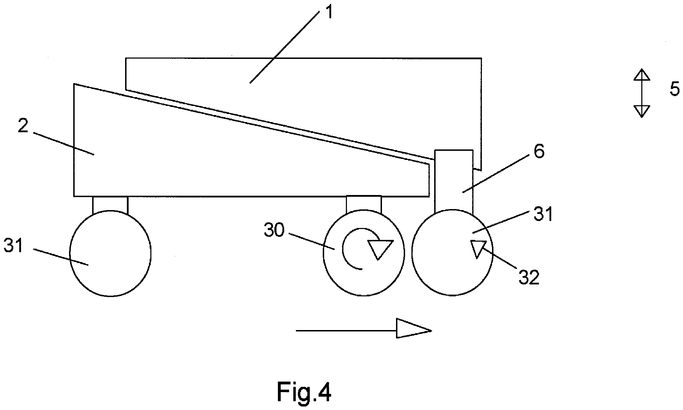

Wie in Figur 3 und Figur 4 gezeigt, ist auch mit nur einem einzigen Antriebrad 30 beziehungsweise mit nur einer Sorte von synchron betriebenen Antriebsrädern 30, eine Hubbewegung ausführbar.

Wenn nämlich, wie in Figur 3 und Figur 4 gezeigt, eines oder jedes der beiden Fahrgestellteile (1, 2) jeweils über Bockrollen 31 auf der Verfahrfläche verfahrbar ist, ist eine Höhenverstellung durch das relative Verfahren der beiden Fahrgestellteile (3, 4) auch dadurch möglich, dass eines der Fahrgestellteile, im Beispiel also das erste Fahrgestellteil 1, abgebremst wird. Hierzu ist an diesem Fahrgestellteil 1 eine Bremse angeordnet oder es ist eine Bremse 32 an der mit dem ersten Fahrgestellteil 1 verbundenen Bockrolle 31.

Wenn die Bremskraft steuerbar ist, ist auch hier ein Ausführen des Hubs schon während der Fahrt durch entsprechendes Bremsen der Bockrolle 31 ausführbar.

Als Bockrollen sind Lenkrollen oder auch andere Räder verwendbar. Im Wesentlichen wird die Gewichtskraft über die Bockrollen 31 in die Verfahrfläche geleitet. Das Antriebsrad 30 ist mittels des mit ihm verbundenen Elektromotors, der wiederum aus einem Umrichter gespeist ist, antreibbar. Dabei wird vorzugsweise das Antriebsrad mittels eines Federelements derart stark an die Verfahrfläche angedrückt, dass es seine Haftung nicht verliert. Somit muss über die Antriebsrolle 30 nicht das gesamte Gewicht des Fahrgestellteils geleitet werden.

Vorzugsweise sind die Antriebsräder 30 lenkbar angeordnet. Es ist also die Radachse der Antriebsräder 30 parallel zur Verfahrebene drehbar. Hierzu ist das Antriebsrad über ein Drehlager mit dem zweiten Fahrgestellteil 2 verbunden.

Die Hubrichtung ist in den Figuren 2 und 4 mittels des Bezugszeichen 5 gekennzeichnet und erfolgt in oder entgegen die Gravitationsrichtung.

Bei einem weiteren erfindungsgemäßen Ausführungsbeispiel ist die schiefe Ebene arretierbar, so dass bei der Fahrt ohne Höhenverstellung kein unbeabsichtigtes Anheben der Last erfolgt.

Bei einem weiteren erfindungsgemäßen Ausführungsbeispiel sind die beiden Fahrgestellteile (3, 4) entlang der schiefen Ebene geführt. Somit ist nur eine relative Verschiebung der beiden Fahrgestellteile (3, 4) entlang der schiefen Ebene aneinander ermöglicht.

Bei einem weiteren erfindungsgemäßen Ausführungsbeispiel ist das Fahrzeug als schienengeführtes Fahrzeug ausgeführt. Das erfindungsgemäße Prinzip ist auch auf solche Fahrzeuge in einfacher Weise übertragbar. Wobei dann statt der Bockrollen nur Schienenräder eingesetzt werden und die Antriebsräder (3, 4, 30) ebenfalls als Schienenräder ausführbar sind.

### Bezugszeichenliste

- 1: erster Fahrgestellteil
- 2: zweiter Fahrgestellteil
- 3: erste Antriebsrad, insbesondere erste Antriebsrolle
- 4: zweites Antriebsrad, insbesondere zweite Antriebsrolle
- 5: Hub
- 6: Linearführung
- 30: Antriebsrad
- 31: Bockrolle, insbesondere Lenkrolle
- 32: gebremste Bockrolle 31

## Patentansprüche

1. Fahrzeug,
wobei das Fahrzeug zwei Fahrgestellteile aufweist (1, 2), die mittels einer schiefen Ebene verbunden sind, insbesondere die mittels einer Führung und/oder Gleitlagerung entlang einer schiefen Ebene,
wobei an zumindest einem der Fahrgestellteile ein erstes Antriebrad (3, 30) angeordnet ist und am anderen der Fahrgestellteile ein Rad (4, 32), wobei mittels einer Einrichtung eine Drehzahldifferenz zwischen der Drehzahl des Antriebsrads und der Drehzahl des Rades bewirkbar ist,
**dadurch gekennzeichnet, dass**
die Fahrgestellteile mittels einer Führung entlang der schiefen Ebene geführt angeordnet sind,
- wobei die Einrichtung eine Bremseinrichtung ist, welche auf das Rad wirkt,
- und wobei die Einrichtung einen gesteuerten oder geregelten Elektromotor aufweist, mittels dessen das Rad antreibbar ist.

2. Fahrzeug nach mindestens einem der vorangegangenen Ansprüche, **dadurch gekennzeichnet, dass**
ein Arretierungsmittel vorgesehen ist, mittels dessen die relative Bewegung der Fahrgestellteile entlang der schiefen Ebene arretierbar oder freigebbar ist.

3. Fahrzeug nach mindestens einem der vorangegangenen Ansprüche, **dadurch gekennzeichnet, dass**
das Rad eine Bockrolle oder eine Lenkrolle ist,

4. Fahrzeug nach mindestens einem der vorangegangenen Ansprüche, **dadurch gekennzeichnet, dass**
der gesteuerte oder geregelte Elektromotor der Einrichtung das Rad abtreibt mit einer vorgegebenen Solldrehzahl, welche bei Ausführung einer Normalfahrt, insbesondere also Fahrt ohne Hubbewegung, gleich und bei Ausführung der Hubbewegung unterschiedlich ist zur Drehzahl des ersten Antriebsrades..

5. Fahrzeug nach mindestens einem der vorangegangenen Ansprüche, **dadurch gekennzeichnet, dass**
das Antriebsrad einen gesteuerten oder geregelten Elektromotor aufweist, mittels dessen das Rad antreibbar ist, insbesondere mit einer vorgegebenen Solldrehzahl, welche bei Ausführung einer Normalfahrt ohne Hubbewegung gleich und bei Ausführung einer Hubbewegung unterschiedlich ist zur Solldrehzahl des Rades.

6. Fahrzeug nach mindestens einem der vorangegangenen Ansprüche, **dadurch gekennzeichnet, dass**
die Richtung der Normale der schiefen Ebene einen nicht verschwindenden Winkelbetrag zur Richtung der Normale der Verfahrebene aufweist.

7. Fahrzeug nach mindestens einem der vorangegangenen Ansprüche, **dadurch gekennzeichnet, dass**
das Antriebsrad oder das Rad über eine Linearführung mit dem ersten oder zweiten Fahrgestellteil verbunden ist.

8. Fahrzeug nach mindestens einem der vorangegangenen Ansprüche, **dadurch gekennzeichnet, dass**
an einem oder beiden der Fahrgestellteile Lenkrollen oder Bockrollen angeordnet sind.

9. Fahrzeug nach mindestens einem der vorangegangenen Ansprüche, **dadurch gekennzeichnet, dass**
eine Steuereinrichtung Steuersignale und/oder Steuerinformation, insbesondere Solldrehzahl oder Solldrehmoment, zum Umrichter und/oder zur Einrichtung überträgt.

10. Fahrzeug nach mindestens einem der vorangegangenen Ansprüche, **dadurch gekennzeichnet, dass**
das Antriebsrad mittels eines am Fahrgestellteil abgestützten Federelements oder eines Linearaktors gegen die Verfahrebene gedrückt ist.

## Claims

1. Vehicle,
wherein the vehicle has two chassis parts (1, 2) which are connected by means of a sloping plane, in particular which along a sloping plane by means of a guide and/or sliding bearing,
wherein a first drive wheel (3, 30) is arranged on at least one of the chassis parts and a wheel (4, 32) is arranged on the other of the chassis parts,
wherein a rotational speed difference between the rotational speed of the drive wheel and the rotational speed of the wheel can be brought about by means of a device,
**characterized in that**
the chassis parts are arranged to be guided along the sloping plane by means of a guide,
- wherein the device is a braking device which acts on the wheel, and
- wherein the device has a controlled or regulated electric motor, by means of which the wheel can be driven.

2. Vehicle according to at least one of the preceding claims,
**characterized in that**
an arresting means is provided, by means of which the relative movement of the chassis parts along the sloping plane can be arrested or enabled.

3. Vehicle according to at least one of the preceding claims,
**characterized in that**
the wheel is a fixed castor or a steering castor.

4. Vehicle according to at least one of the preceding claims,
**characterized in that**
the controlled or regulated electric motor of the device drives the wheel at a predefined setpoint rotational speed which is the same as the rotational speed of the first drive wheel when driving normally, that is to say in particular when driving without a lifting movement, and differs therefrom when executing the lifting movement.

5. Vehicle according to at least one of the preceding claims,
**characterized in that**
the drive wheel has a controlled or regulated electric motor, by means of which the wheel can be driven, in particular at a predefined setpoint rotational speed which is the same as the setpoint rotational speed of the wheel when driving normally without a lifting movement and differs therefrom when executing a lifting movement.

6. Vehicle according to at least one of the preceding claims,
**characterized in that**
the direction of the normal of the sloping plane is at a non-vanishing angle to the direction of the normal of the movement plane.

7. Vehicle according to at least one of the preceding claims,
**characterized in that**
the drive wheel or the wheel is connected to the first or second chassis part via a linear guide.

8. Vehicle according to at least one of the preceding claims,
**characterized in that**
steering castors or fixed castors are arranged on one or both of the chassis parts.

9. Vehicle according to at least one of the preceding claims,
**characterized in that**
a control device transmits control signals and/or control information, in particular a setpoint rotational speed or setpoint torque, to the converter and/or to the device.

10. Vehicle according to at least one of the preceding claims,
**characterized in that**
the drive wheel is pressed against the movement plane by means of a spring element supported on the chassis part or by means of a linear actuator.

## Revendications

1. Véhicule,
sachant que le véhicule présente deux parties de châssis (1, 2) qui sont reliées au moyen d'un plan incliné, en particulier au moyen d'un guide et/ou d'un palier lisse le long d'un plan incliné,
sachant qu'une première roue motrice (3, 30) est disposée sur au moins une des parties de châssis et qu'une roue (4, 32) est disposée sur l'autre des parties de châssis,
sachant qu'un dispositif permet de produire une différence de vitesse de rotation entre la vitesse de rotation de la roue motrice et la vitesse de rotation de la roue,
**caractérisé en ce que** les parties de châssis sont disposées en étant guidées au moyen d'un guide le long du plan incliné,
- sachant que le dispositif est un dispositif de freinage qui agit sur la roue,
- et sachant que le dispositif présente un moteur électrique commandé ou régulé, au moyen duquel la roue peut être entraînée.

2. Véhicule selon la revendication précédente, **caractérisé en ce qu'**il est prévu un moyen de blocage qui permet de bloquer ou de libérer le mouvement relatif des parties de châssis le long du plan incliné.

3. Véhicule selon au moins une des revendications précédentes, **caractérisé en ce que** la roue est une roulette fixe ou une roulette directrice.

4. Véhicule selon au moins une des revendications précédentes, **caractérisé en ce que** le moteur électrique commandé ou régulé du dispositif entraîne la roue à une vitesse de rotation de consigne prédéfinie qui est identique à la vitesse de rotation de la première roue motrice lors de l'exécution d'une marche normale, en particulier donc une marche sans mouvement de levage, et qui en est différente lors de l'exécution du mouvement de levage.

5. Véhicule selon au moins une des revendications précédentes, **caractérisé en ce que** la roue motrice présente un moteur électrique commandé ou régulé, au moyen duquel la roue peut être entraînée, en particulier à une vitesse de rotation de consigne prédéfinie qui est identique à la vitesse de rotation de consigne de la roue lors de l'exécution d'une marche normale sans mouvement de levage, et qui en est différente lors de l'exécution d'un mouvement de levage.

6. Véhicule selon au moins une des revendications précédentes, **caractérisé en ce que** la direction de la normale au plan incliné forme un angle non infiniment petit avec la direction de la normale au plan de déplacement.

7. Véhicule selon au moins une des revendications précédentes, **caractérisé en ce que** la roue motrice ou la roue est reliée par l'intermédiaire d'un guide linéaire à la première ou la deuxième partie de châssis.

8. Véhicule selon au moins une des revendications précédentes, **caractérisé en ce que** des roulettes directrices ou des roulettes fixes sont disposées sur une des parties de châssis ou sur les deux.

9. Véhicule selon au moins une des revendications précédentes, **caractérisé en ce qu'**un dispositif de commande transmet au convertisseur et/ou au dispositif des signaux de commande et/ou des informations de commande, en particulier une vitesse de rotation de consigne ou un couple de rotation de consigne.

10. Véhicule selon au moins une des revendications précédentes, **caractérisé en ce que** la roue motrice est pressée contre le plan de déplacement au moyen d'un élément à effet de ressort soutenu sur la partie de châssis ou d'un actionneur linéaire.
